# EUROPEAN PATENT APPLICATION

(11) **EP 3 667 785 A1**
(43) Date of publication of application: **17.06.2020**
(21) Application number: 18212215.0
(22) Date of filing: 13.12.2018
(51) Int. Cl.: H01M 4/86, H01M 4/88, H01M 4/92

(54) **FUNCTIONALISED ELECTROCATALYTICALLY ACTIVE NANOCOMPOSITE MATERIAL AND MANUFACTURING PROCESS OF SAID MATERIAL**

(71) Applicant: Technische Universität Graz, 8010 Graz (AT)
(72) Inventor: Kocher, Katharina, 8010 Graz (AT); Bender, Clemens, 8053 Graz (AT); Hacker, Viktor, 8042 Graz (AT)
(74) Representative: Patentanwaltskanzlei Matschnig & Forsthuber OG

(57) **Abstract**

The invention relates to a functionalized electrocatalytically active nanocomposite material (1), comprising an electrically conductive support material, polyaniline as well as platinum nanoparticles, wherein said electrically conductive support material (10) is embedded within a coating layer (21) of polyaniline (20) and said polyaniline layer (21) is decorated with platinum nanoparticles (30) that are firmly bound to an outer surface (22) of said polyaniline layer (21). Other aspects of the present invention refer to new production methods to produce said electrocatalytically active nanocomposite material (1) per se as well as a method to produce an electrocatalyst.

## Description

### Field of the invention

The invention generally relates to a new functionalized electrocatalytically active nanocomposite material that can be used as electrocatalyst in fuel cells and/or for electrolysers. Other aspects of the present invention refer to new production methods to produce said electrocatalytically active nanocomposite material per se as well as a to produce an electrocatalyst.

### Description of prior art

Electrochemical fuel cells can convert the chemical reaction energy obtained from a continuously supplied fuel and from an oxidizing agent into electric energy. For this purpose, the fuel cell has electrodes that are separated from each other by a semi-permeable membrane or by an electrolyte. The electrode plates usually consist of metal or carbon nanotubes and can be coated with a catalyst of a noble metal like platinum or palladium. Examples of possible electrolytes include alkaline reaction solutions or acids, alkali carbonate melts, or solid electrolytes like solid oxide or ceramic electrolytes or solid membranes like polymer membranes. The energy stems from a reaction of oxygen with the fuel, for instance, hydrogen or else with organic compounds such as, methane or methanol.

In the case of a polymer electrolyte membrane fuel cell (PEMFC) or polymer electrolyte fuel cell (PEFC), the plates which serve as electrodes have an incorporated gas passage structure. Moreover, a reactive layer is present that, as a rule, is applied directly onto the ionomer membrane and that contains the catalyst, the electron conductor which usually can be carbon black or a nanomaterial containing carbon as well as the proton conductor.

Polymer electrolyte membrane fuel cells are the most advanced fuel cell technology to date and are considered as promising clean energy converters for future applications as stationary or portable fuel cells or for automotive purposes because of their high energy conversion efficiencies and low environmental impact. At present, the most commonly used cathode catalysts are carbon-supported platinum (Pt) and platinum-alloy catalysts with highly dispersed Pt or Pt-alloy nanoparticles supported on carbon. Carbon (C) is an important support material, acting as high-surface-area substrate for the structuring and proper dispersion of Pt or Pt-alloy nanoparticles so that Pt catalysts with low metal loadings can be used for fuel cell operation.

Despite its widespread use, performance of currently available Pt/C catalysts in polymer electrolyte fuel cells is unsatisfying due to carbon corrosion, platinum particle agglomeration and dissolution during operation. Furthermore it is worthwhile noting that in conventional membrane electrode assemblies (MEAs) approximately only 10% of the available platinum is catalytically active.

Alloying platinum with late transition metals leads on the one hand to improved catalytic performance through ligand and strain effects, on the other hand these platinum-transition metal catalysts are still prone to corrosion under fuel cell operating conditions. Moreover, the alloyed metal tends to dissolve, migrating into the membrane thus leading further to membrane degradation or destruction.

To sum up, the insufficient electrocatalytic activity and the poor electrochemical stability of carbon support and, thus, low durability as well as high costs of noble metal cathode catalysts still remain major obstacles in the commercialization of such polymer electrolyte membrane fuel cells as environmentally friendly power devices inter alia for automotive applications. As automotive related operation conditions accelerate PEMFC degradation, especially in the catalyst layer of the membrane electrode assembly (MEA), system control approaches or material based reaction solutions have to be considered to mitigate performance losses.

One approach in order to mitigate catalyst degradation is the use of other catalyst carriers, for example carbon nanotubes or carbon nanofibers, more graphitised carbonaceous material, the combination of different carbon materials, carbides or even carbon-free materials like titanium oxide. Although these might be excellent corrosion resistant materials, their production is very complex and costly.

Recently also conducting polymers such as polyaniline (PANI) have received special attention in fuel cell applications as they can improve the durability of electrodes in fuel cells. It has been found out that with the preparation of a platinum (Pt)/PANI-loaded carbon composite, whereby Pt nanoparticles and PANI were thoroughly mixed together throughout the entire polymerization process, the durability of such an electrode for fuel cell applications can be enhanced compared to conventional Pt/C catalysts. However, disadvantageously nearly all of the Pt nanoparticles in such a prepared Pt/PANI/C composite were found to be embedded inside the PANI coating rather than being exposed to the outside of this electrode. Thus, such an electrode shows poor oxygen reduction reaction (ORR) activity and is unsuitable for fuel cell applications.

With a view to enhance the electrode activity, the publications of *S. Chen et al.* refer to a nanostructured catalyst. The catalyst is prepared through direct polymerization of a thin layer of polyaniline (PANI) on a carbon surface of a combined platinum (Pt)/carbon (C) - catalyst. As basis combined Pt/C-nanoparticles with a platinum (Pt)-content of 40% are used whereby the electrically conductive carbon material and the platinum nanoparticles anchored on the carbon material are jointly overcoated with a PANI shell layer. The PANI coating is applied via an oxidative polymerisation reaction using ammonium peroxodisulfate (APS). For synthesis of this Pt/C@PANI catalyst, 20 mg of aniline monomer were dissolved in 20 ml of 0.5 M H₂SO₄ aqueous reaction solution. After ultrasonic blending for 30 min, 80 mg of 40%Pt/C catalyst were dispersed in it. The mixture was then stirred ultrasonically at room temperature for 5 hours to achieve homogeneous dispersion, and then 20 ml of an aqueous reaction solution of 0.5 M H₂SO₄ (sulphuric acid) containing 46.9 mg of (NH₄)₂S₂O₈ (ammonium persulfate, APS) as oxidant was added dropwise with vigorous stirring whereby the molar ratio of APS to aniline was controlled at 1 : 1. The polymerization was conducted in an ice bath for 10 hours. Afterwards the resulting products were filtered and washed with anhydrous alcohol and deionized water and then dried under vacuum at 80°C for 24 hours. [S. Chen et al.: Supporting Information: Nanostructured polyaniline-decorated Pt/C@PANI Core-shell Catalyst with Enhanced Durability and Activity; J. Am. Chem. Soc., 2012, vol. 134, pg. S1-S12]*.*

Unlike the Pt/PANI/C composite, in which most of the Pt nanoparticles have been found to be wrapped within the PANI layer of said composite, when applying a PANI shell layer onto a combined Pt/C-catalyst the PANI shell layer selectively covers the surface of the carbon (C) rather than that of the platinum (Pt). Thus, both the ORR activity as well as the electrochemical durability of this structure of a Pt/ C-catalyst covered by a PANI shell (Pt/C@PANI-catalyst) could be enhanced compared to conventional Pt/C catalysts. Furthermore it could be shown that the activity of this Pt/C@PANI-catalyst highly depends on the thickness of the PANI shell. [S. Chen et al.: Nanostructured polyaniline-decorated Pt/C@PANI Core-shell Catalyst with Enhanced Durability and Activity; J. Am. Chem. Soc., 2012, vol. 134, pg. 13252-13255]*.*

However, when testing this Pt/C@PANI catalyst it was found that still a relevant amount of Pt nanoparticles are at least partly covered or masked by the PANI shell layer or are arranged in platinum agglomerates and disadvantageously cannot provide their full reactive catalyst surfaces. Thus, the ability of the PANI shell layer to selectively cover the surface of the carbon particles only - while not coating also the platinum nanoparticles - turned out to be weak. Especially when platinum agglomerates, which arise by long synthesis times, are co-coated together with the carbon material by the PANI shell layer, heterogeneous PANI layer thicknesses may lead to uncovered or at least insufficiently covered sections of the carbon material. Thus, the carbon corrosion of the Pt/C@PANI catalyst has to be enhanced to allow for a long-term deployment under fuel cell operating conditions. To sum up, there is still the need to further enhance the oxygen reduction reaction (ORR) activity as well as the durability of this known catalyst when used as cathode for fuel cell applications.

In regard to the manufacturing process of this Pt/C@PANI-cathode it can be seen as disadvantage that the required time for dispersing the combined Pt/C catalyst during five hours before polymerisation is very long. Due to the time-consuming and complex manufacturing process as disclosed by *S. Chen et al.,* there is also still the need to further improve and simplify the respective manufacturing process to receive highly stable and active cathode catalysts for the oxygen reduction reaction (ORR) toward durable polymer electrolyte fuel cells.

The tasks of the present invention are to provide an electrocatalytically active nanocomposite material, an electrocatalyst comprising such an electrocatalytically active nanocomposite material as well as to provide respective methods to manufacture said electrocatalytically active nanocomposite material that can eliminate the above-described drawbacks of said catalysts and respective manufacturing processes that are known in the art.

### General description

A first aspect of the invention relates to a functionalized electrocatalytically active nanocomposite material, comprising an electrically conductive support material, polyaniline as well as platinum nanoparticles, wherein said electrically conductive support material is embedded within a coating layer of polyaniline and said polyaniline layer is decorated with platinum nanoparticles that are firmly bound to an outer surface of said polyaniline layer.

Compared to other catalytically active materials known in the art, as here the support material - provided by the electrically conductive support material - is totally embedded in the polyaniline (PANI) coating layer, the inventive electrocatalytically active nanocomposite material impedes the direct contact between the support material and the remaining environment when used for example as in the fuel cell. The platinum nanoparticles that are firmly bound to an outer surface of said polyaniline layer do not adjoin to or abut on the inner support material. The electrically conductive support material can preferably be a carbon-containing support material which is totally embedded in the polyaniline (PANI) coating layer. Thus, the durability and resistance against carbon corrosion of this inventive electrocatalytically active nanocomposite material is advantageously high.

Alternatively to carbon-based support materials, the electrically conductive support material applied can also be a non-carbonaceous support material like an inorganic oxide material such as titanium(VI) oxide (TiO₂) or Tungsten(VI) oxide (WO₃). These carbon-free support materials are very attractive for applications in relatively strong oxidative conditions like for example at a cathode of a working fuel cell.

Thus, the term "electrically conductive support material" as used in this application equally includes support materials that can contain any amount of carbon or that are carbon-free and non-carbonaceous support materials, respectively.

The term "decorated" as used in this application is not intended to imply any notion of ornamentation or decoration. "Polyaniline layer decorated with platinum nanoparticles" means in this context that said polyaniline layer is bearing platinum nanoparticles that are firmly bound or firmly affixed, respectively, to its outer surface.

The term "electrically conductive support material containing carbon" as used in this application equally includes support materials that are made of pure carbon as well as support materials that have a high percentage of carbon or at least a certain content of carbon or carbon compounds.

To differentiate the inventive material from the Pt/C@PANI catalyst as discussed by *S. Chen et al.,* the inventive electrocatalytically active nanocomposite material can be indicated in a symbolic way as "C@PANI+Pt" catalyst.

Another advantage of the total embedding of the electrically conductive support material within a coating layer of polyaniline can be indicated as the PANI coating layer also strengthens the interaction between the Pt nanoparticles that are bound to the outer surface of said PANI layer and the support material embedded within said PANI layer. The polyaniline (PANI) layer provides in an advantageous way a spatial separation of the Pt nanoparticles, hence particle agglomeration is inhibited.

It has been found that the electron delocalization between the polyaniline coating layer and the Pt nanoparticles changes the electronic configuration of the Pt nanoparticles resulting in a favoured electron transfer between the inventive electrocatalytically active nanocomposite material when applied as an electrocatalyst. Thus, also an improved activity toward the oxygen reduction reaction (ORR) performance and an enhanced electrochemical active surface area (ECSA) in comparison to a commercial benchmark can be denoted for said inventive electrocatalytically active nanocomposite material when used as electrocatalyst.

In a further advantageous embodiment of the invention, the electrocatalytically active nanocomposite material can comprise platinum nanoparticles that are distributed, preferably are uniformly distributed, over at least an outer surface section of said polyaniline layer.

Due to the polyaniline coating layer the interaction between the Pt nanoparticles firmly bound to its outside and the electrically conductive support material embedded inside of said polyaniline coating layer, a spatial separation of the Pt nanoparticles is provided. Hence particle agglomeration is inhibited and the Pt nanoparticles are preferably uniformly distributed on the outside of said polyaniline layer.

Preferably, the electrically conductive support material can contain carbon and can be selected from the group of carbon powder, carbon black powder, graphite particles, graphene particles, carbon nanotubes, carbon fibers and/or mesoporous carbon.

It has shown that particularly suitable carbon black powder can be used as electrically conductive support material. For example carbon black powder that is commercially available under the label "Vulcan XC 72R carbon black" provides excellent electrical conductivity in a range of applications, delivering high electrical conductivity at relatively low loading levels. This commercially available powder has an average particle size of approximately 50 nm. Among the attributes for Vulcan XC 72R are good chemical and physical cleanliness (with low contents of moisture, residues and ash), good processability, as well as low sulphur content and ionic contamination. Compared to other conductive grades of carbon black, Vulcan XC 72R is typically easier to disperse. In addition to conductivity, Vulcan XC 72R also provides a high level of blackness to be obtained in the application. This carbon black powder can be purchased inter alia at FuelCellStore (www.fuelcellstore.com).

Still another advantage of said inventive electrocatalytically active nanocomposite material can be that the electrically conductive support material preferably comprises a polyaniline surface functionalization wherein the platinum nanoparticles are covalently bonded to an outer surface of said polyaniline layer.

As polyaniline is a conducting polymer, the electrically conductive support material like for example carbon black powder when totally embedded within a coating layer of polyaniline shows a functionalized surface that provides enhanced bond strengths between both the polyaniline layer as well as the Pt nanoparticles that are firmly covalently bonded to the outer surface of said polyaniline layer. It is understood that the covalent bonding stem above all from the interaction of electron systems between the carbon C of the support material, the Pt nanoparticles and the polyaniline layer, specifically between the p-orbitals of carbon (C), the d-orbitals of platinum (Pt), as well as the *π*-electron system of polyaniline (PANI).

In another preferred embodiment of the invention, the composition of said electrocatalytically active nanocomposite material can contain (indicated percentage are given each as percent by weight [%(w/w)]):
- from 5% to 50%, preferably from 10% to 40%, particularly preferably 30%, of polyaniline;
- from 10% to 70%, preferably from 20% to 60%, particularly preferably 50%, of platinum nanoparticles.

It has been found that an inventive electrocatalytically active nanocomposite material with a content of approximately 50% (by weight) of Pt nanoparticles and approximately 30% (by weight) of polyaniline (PANI) shows excellent properties in regard to enhanced oxygen reduction reaction (ORR) performance and enhanced electrochemical active surface area (ECSA).

In another advantageous embodiment of the invention, the electrocatalytically active nanocomposite material can have the following ranges of the respective length extensions or indications of size (indicated lengths are each given in nanometers [nm]):
- from 10 nm to 100 nm, preferably from 20 nm to 80 nm, particularly preferably from 40 nm to 60 nm, of mean diameter of said electrically conductive support material;
- from 0.1 nm to 5 nm, preferably from 0.2 nm to 2 nm, particularly preferably from 0.5 nm to 1 nm, of mean layer thickness of said polyaniline layer;
- from 1 nm to 20 nm, preferably from 2 nm to 10 nm, particularly preferably from 4 nm to 6 nm, of mean diameter of said platinum nanoparticles.

The aforesaid term of a "mean diameter" or average diameter, respectively, corresponds to the greatest extension of the respective particle. Thus, also for particles that show a deviation from the spherical form, their characteristic length corresponding to a mean diameter can be determined.

Advantageously it was demonstrated that in an exemplary case when the average particle size of the electrically conductive support material is approximately 50 nm, said average particle size does not change due to functionalisation and precipitation of Pt particles.

It was found out that the layer thickness of the polyaniline (PANI) layer can define the electrocatalytic characteristics of the electrocatalytically active nanocomposite material. To give an example for an electrocatalytically active nanocomposite material with a content of 30% (by weight) of polyaniline, the average layer thickness of said polyaniline layer is approximately from 0.5 nm to 1 nm. This layer thickness is sufficient to totally embed the inner core of the electrically conductive support material within said polyaniline coating layer.

Advantageously the Pt nanoparticles that are applied to decorate the polyaniline layer have a preferred average particle size of approximately 5 nm.

Particularly advantageous can be when the electrocatalytically active nanocomposite material according to invention shows a loading ratio of platinum nanoparticles to electrically conductive support material that is 50 : 50 and/or a loading ratio of platinum nanoparticles to polyaniline that is 1 : 0.6. Preliminary tests showed that with these loading ratios that are defined as mass ratios of the respective components that can be found in the electrocatalytically active nanocomposite material, best results regarding both the ORR activity as well as the electrochemical durability can be achieved with such a catalyst.

A second aspect of the invention relates to an electrocatalyst, comprising the electrocatalytically active nanocomposite material.

A third aspect of the invention relates to a fuel cell, in particular to a polymer electrolyte membrane fuel cell, comprising such an electrocatalyst.

A fourth aspect of the invention relates to an electrolyser comprising such an electrocatalyst.

Said electrocatalyst can be applied in several different electrochemical energy storage and conversion systems.

Another aspect of the invention relates to a method for producing an electrocatalytically active nanocomposite material. The production method comprises the following steps:
-a- Providing an electrically conductive support material;
-b- Dissolving of aniline monomer in a first acidic reaction solution;
-c- Dispersing said electrically conductive support material in said first acidic reaction solution containing dissolved aniline monomer;
-d- Initiating an oxidative polymerization reaction of aniline by means of adding ammonia persulfate as oxidant into said first acidic reaction solution;
-e- Coating the electrically conductive support material within a thin layer of polyaniline to obtain a functionalized intermediate product of said conductive support material being embedded within a coating layer of polyaniline;
-f- Dispersing said intermediate product in a second acidic reaction solution;
-g- Adding of hexachloroplatinic acid into said second acidic reaction solution;
-h- Initiating an anion exchange reaction by means of adding a reducing agent into said second acidic reaction solution and to reduce the hexachloroplatinic acid to platinum nanoparticles;
-i- Mixing of said second acidic reaction solution;
-j- Depositing of platinum nanoparticles on the polyaniline layer of said intermediate product to obtain said electrocatalytically active nanocomposite material.

This inventive production method is a two-stage synthesis process.

The first process stage which is represented by the steps -a- to -e- refers to the functionalizing of the electrically conductive support material like a carbon containing support material with a polyaniline (PANI) layer to receive a functionalized intermediate product. If necessary further cleaning steps can be applied after the coating step -e- to finally receive said functionalized intermediate product.

The support material, for example a carbon-based support material, is embedded in a thin layer of polyaniline (PANI) via an oxidative polymerization of aniline by means of ammonia persulfate as oxidant. Thereby, the concentration of monomers in the first acidic reaction solution determines the thickness of the PANI layer, what further defines the electrocatalytic characteristics of the catalyst samples to be produced.

The subsequent second process stage which is represented by the steps -f- to -j- refers to the positioning of Pt nanoparticles on the outer surface of said functionalized intermediate product to receive - after having performed further cleaning steps when necessary - said electrocatalytically active nanocomposite material according to the invention.

In the second process stage the Pt nanoparticles can be deposited on the decorated support for example via a bromide anion exchange (BEA) reaction using sodium borohydride (NaBH₄) as reducing agent. Alternatively instead of sodium borohydride also pure hydrogen can be used as reducing agent that can be directly introduced into the first acidic reaction solution.

Steps -i- (mixing of said second acidic reaction solution) and -j- (depositing of platinum nanoparticles on the polyaniline layer of said intermediate product) are preferably conducted simultaneously to obtain said electrocatalytically active nanocomposite material. Thus, while mixing the reaction solution intensively, deposition or precipitation, respectively, of platinum nanoparticles takes place. By varying of one or several of the respective process parameters, namely of adjusting the acidic pH-value of the second acidic reaction solution, adjusting the mixing and reaction time, respectively, as well varying the mixing intensity, formation of unwanted platinum nanoparticle agglomerates can be avoided and an uniform distribution of deposited platinum nanoparticles that are firmly bound onto the polyaniline layer of said intermediate product can be derived.

Also alternative timetables are thinkable to conduct steps -i- and -j- only partly simultaneously and/or time-delayed in a sequential way.

Via this inventive production method functionalized and durable platinum (Pt) based catalysts can successfully be produced by a simple straight-forward synthesis.

In the resulting product, the electrocatalytically active nanocomposite material of this novel two stage synthesis process - said electrocatalytically active nanocomposite material can be symbolized and written for short as C@PANI+Pt in those cases when a carbon (C) -based support material is applied -, the polyaniline coating layer plays three important roles as it protects the catalyst against deterioration caused by severe operation parameters for example when applied in a fuel cell:
- First, as the support material like a carbon containing support material is totally embedded in the polyaniline layer, the polyaniline layer impedes the direct contact between the carbon support material and the remaining environment in the fuel cell. Thus, resistance against carbon corrosion when a carbon support material is applied can be enhanced.

- Second, the polyaniline layer strengthens the interaction between the Pt nanoparticles and the carbon support material, it provides a spatial separation of the Pt nanoparticles, hence particle agglomeration is inhibited.
- Third, the electron delocalization between the polyaniline layer and the Pt nanoparticles changes the electronic configuration of the Pt nanoparticles resulting in a favoured electron transfer between the catalyst and oxygen and, thus, enhancing electrocatalytic performance.

In a further advantageous embodiment of the inventive production method, as a subsequent process to step -e- and/or as a subsequent process to step -j-, cleaning and drying of the intermediate product and/or of the electrocatalytically active nanocomposite material can be carried out.

Preferably the resulting products are centrifuged and washed with anhydrous alcohol and deionized water and then dried under vacuum or under normal atmospheric conditions at an exemplary temperature of 40°C for approximately 16 hours.

In another preferred embodiment of the inventive production method, in step -h- an bromide anion exchange reaction using sodium borohydride (NaBH₄) as reducing agent is applied.

Via this route it has been found that especially when carbon-based support materials are used in combination sodium borohydride as reducing agent, valuable crystal structures are formed that can be classified according to Miller indices. These crystal structures show beneficial properties for catalysis of oxygen.

Preferably the production method according to the invention can be carried out in a way that for mixing of said second acidic reaction solution according to step -i- an ultrasonic mixer is applied for a mixing period from 1 hour to 3 hours, preferably of 2 hours.

Surprisingly it has been found out that under above said conditions, i.e. when an ultrasonic mixer is applied as disperser and an acidic reaction solution is provided, the platinum nanoparticles can be evenly distributed within said acidic reaction solution after a comparatively short mixing period of up to three hours, preferably of two hours. It could be shown that longer mixing periods lead to unwanted platinum particle agglomerates that interfere with the task to evenly distribute said Pt nanoparticles. Conversely, when the mixing period is short, for example shorter than one hour, than hexachloroplatinic acid (H₂PtCl₆) might not completely be reduced to platinum nanoparticles. Thus, only a smaller amount of Pt nanoparticles is available in the acidic reaction solution that can be deposited onto the polyaniline layer. Also in this latter case the outcome is poor.

Also of advantage can be when the inventive production method is conducted in a way that the temperature of steps -a- to -e- to obtain said functionalized intermediate product is kept below 15°C, preferably below 12°C, particularly preferably below 10°C.

As said above the first process stage is represented by the steps -a- to -e- and refers to the functionalizing of the carbon containing support material with a polyaniline (PANI) layer to receive a functionalized intermediate product. It could be found out that when the respective process steps -a- to -e- are implemented under chilled conditions, then the polyaniline coating layer will cover very evenly the surface of the carbon support material beneath. As the polymerization reaction of aniline monomer to polyaniline is exothermic, the average chain length of the polymerized polyaniline can be elongated under chilled conditions. Thus, advantageously functionalizing under said lower temperatures results in a polyaniline coating layer that can embed the carbon support material more evenly.

Even a further aspect of the invention relates to a method for producing an electrocatalyst, comprising the following steps:
(i) Dispersing a colloidal solution of an electrocatalytically active nanocomposite material;
(ii) Depositing the dispersed electrocatalytically active nanocomposite material on a substrate to create a porous three-dimensional network of the electrocatalytically active nanocomposite material.

This method comprises forming a liquid dispersion of the electrocatalytically active nanocomposite material as described before and depositing the electrocatalytically active nanocomposite material from the dispersion on a substrate. Preferably the substrate comprises a polymer electrolyte membrane and/or a gas diffusion layer and is configured to be used in a fuel cell and/or an electrolyser. Deposition of the nanocomposite material onto the substrate may be done in any suitable way, for example via a spraying or dipping technique. Especially for spraying techniques it is known that porosity of the deposited nanocomposite material can be varied to allow fabrication of multi-layered MEAs with predefined layer-wise properties and porosities, respectively.

Thus, via the inventive method for producing an electrocatalyst, also substrates that comprise at least one of a polymer electrolyte membrane and a gas diffusion layer for usage in a fuel cell and/or an electrolyser can be processed. Dispersed electrocatalytically active nanocomposite material can be deposited for example by applying one of the aforesaid techniques onto said substrates.

### Detailed description of embodiments of the invention

Reference is made to the inventive method for producing an electrocatalytically active nanocomposite material. In the following a preferred embodiment of the production method is discussed in detail:
According to step -a- an electrically conductive support material containing carbon is provided. Suitable electrically conductive support materials can be for example either carbon-free materials like inorganic metal oxides, or carbon-containing materials like carbon powder, carbon black powder, graphite particles, graphene particles, carbon nanotubes, carbon fibers and/or mesoporous carbon. Particularly suitable can be carbon black powder with an average particle size of approximately 50 nm as this support material shows high electrical conductivity as well as an even distribution of grain sizes.

In the following step -b- aniline is dissolved in a first acidic reaction solution. Preferably aniline monomer can be dissolved in an aqueous solution of 0.5M sulphuric acid (H₂SO₄). Alternatively aniline monomer can also be dissolved in an aqueous solution of 0.1M perchloric acid (HClO₄). Preferably ultrasonic blending for approximately 2 minutes is applied to enhance the dissolution of said aniline monomer. Dissolving is preferably conducted in an ice bath at temperatures of below 10°C.

According to step -c- said electrically conductive support material in form of carbon black powder is added and dispersed in the first acidic reaction solution preferably via ultrasonic blending for approximately 45 minutes under chilled conditions in an ice bath at temperatures of approximately 10°C. After stirring the mixture ultrasonically a homogeneous dispersion is achieved. The loading of the support material in form of carbon black powder in the first acidic reaction solution is for example approximately 50% (by weight) of carbon support material.

In subsequent step -d- an oxidative polymerization reaction of aniline is initiated by means of adding ammonia persulfate as oxidant into said first acidic reaction solution. For this purpose an aqueous reaction solution of 0.5 M H₂SO₄ (sulphuric acid) containing (NH₄)₂S₂O₈ (ammonium persulfate, APS) as oxidant is added dropwise with vigorous stirring whereby the molar ratio of APS to aniline is controlled at a molar ratio of 1 : 1.

The polymerization step -e- to coat the carbon support material within a thin layer of polyaniline is conducted under chilled conditions at a temperature of 4°C during 16 hours.

Afterwards this derived polymer is centrifuged several times, washed with anhydrous alcohol and deionized water and then dried for example under vacuum or under atmospheric conditions at 40°C for approximately 16 hours.

Thus, via the first process stage a functionalized intermediate product of said conductive support material being embedded within a coating layer of polyaniline is derived.

The subsequent second process stage to position and firmly bound Pt nanoparticles on the outer surface of said functionalized intermediate product is initiated via step -f- when said intermediate product is dispersed in a second acidic reaction solution. Conditions are comparable to aforesaid conditions of step -b-. Thus, an aqueous solution of 0.5M sulphuric acid (H₂SO₄) or alternatively an aqueous solution of 0.1M perchloric acid (HClO₄) can be used as second acidic reaction solution. Preferably ultrasonic blending for several minutes is applied to enhance the dispersion of said functionalized intermediate product within the reaction solution. Dispersion is preferably conducted in an ice bath at temperatures of below 10°C.

According to step -g-, hexachloroplatinic acid (H₂PtCl₆) is added into said second acidic reaction solution. Ultrasonic dispersing for approximately 45 minutes is applied to thoroughly mix the reaction solution. The amount of added hexachloroplatinic acid can be calculated in a way that it corresponds to a content of approximately 50% (by weight) of Pt nanoparticles in said second acidic reaction solution that can be deposited or precipitated, respectively on the polyaniline coating layer of the functionalized intermediate product afterwards.

Next in step -h- an anion exchange reaction is initiated by means of adding using sodium borohydride (NaBH₄) as reducing agent into said second acidic reaction solution and to reduce the hexachloroplatinic acid (H₂PtCl₆) to platinum nanoparticles. Sodium borohydride is added dropwise with vigorous stirring whereby the molar ratio of Sodium borohydride to hexachloroplatinic acid is controlled at 15 : 1.

The anion exchange reaction can be quoted as:

H₂PtCl₆ · 6 H2O + 6 NaBH₄ -> Pt + 6 NaCl+ 6 BH₃ + 6 H₂O + 4 H₂

According to step -i- said second acidic reaction solution is mixed via ultrasonic mixing preferably at room temperature for approximately 2 hours. Thus, in this preferred embodiment steps -i- (mixing of said second acidic reaction solution) and -j- (depositing of platinum nanoparticles on the polyaniline layer of said intermediate product) are conducted simultaneously to obtain said electrocatalytically active nanocomposite material. Thus, while mixing the reaction solution intensively, deposition or precipitation, respectively, of platinum nanoparticles takes place.

When the aforesaid process parameters are applied, namely an aqueous solution of 0.5M sulphuric acid (H₂SO₄) is used as second acidic reaction solution having an acidic pH-value, a high mixing intensity is applied due to an ultrasonic mixer, formation of unwanted platinum nanoparticle agglomerates can be avoided and an uniform distribution of deposited platinum nanoparticles that are firmly bound onto the polyaniline layer of said intermediate product can be derived.

Afterwards this nanocomposite material is centrifuged several times, washed with anhydrous alcohol and deionized water and then dried under vacuum or under normal atmospheric conditions at temperatures of approximately 40°C for approximately 16 hours to obtain a cleaned electrocatalytically active nanocomposite material according to the invention that can be used straight away for example for subsequent production of an electrocatalyst.

The oxygen reduction reaction (ORR) performance and the electrochemical active surface area (ECSA) of samples of said electrocatalytically active nanocomposite material derived by the inventive production method were characterized by cyclic voltammetry using rotating disk electrode (RDE) technique and physico-chemical methods such as transmission electron microscopy coupled with energy dispersive X-ray spectroscopy (TEM-EDX) and X-ray powder diffraction (XRD).

The electrochemical ex-situ analysis shows that both, the ORR activity and the ECSA are improved by the functionalization of the catalyst. As intermolecular interactions between the catalyst and the polyaniline polymer facilitate the oxygen and oxygen intermediate species desorption, more catalytic active areas are accessible of the electrocatalytically active nanocomposite material compared to catalysts known in the art. This positive effect occurs even after repeated stress tests. This results in an increased ECSA and low onset potential as well as high current densities indicate improved activity toward the ORR of an inventive electrocatalytically active nanocomposite material in comparison to a commercial benchmark catalyst material.

### Brief description of the drawings

In the following, in order to further demonstrate the present invention, illustrative and non-restrictive embodiments are discussed, as shown in the drawings, which show:
- - **Fig. 1**: in a schematic isometric view in a partly cut-free way an electrocatalytically active nanocomposite material according to the invention;
- - **Fig. 2A**: an transmission electron microscopy (TEM) image of electrocatalytically active nanocomposite material according to the invention;
- - **Fig. 2B**: a detailed view of Fig. 2A;
- - **Fig. 3**: a diagram presenting polarization curves of the oxygen reduction reaction (ORR) of nanocomposite material according to the invention compared to conventional Pt/C catalytic materials;
- - **Fig. 4**: a diagram showing mass activities as indicator for electrocatalytic activity of nanocomposite material according to the invention compared to conventional Pt/C catalytic materials;
- **- Fig. 5**: a diagram presenting cyclic voltammograms of nanocomposite material according to the invention compared to conventional Pt/C catalytic materials;
- **- Fig. 6**: a diagram showing long-term stability evaluated by means of decreased electrochemical active surface area (ECSA) of nanocomposite material according to the invention compared to conventional Pt/C catalytic materials.

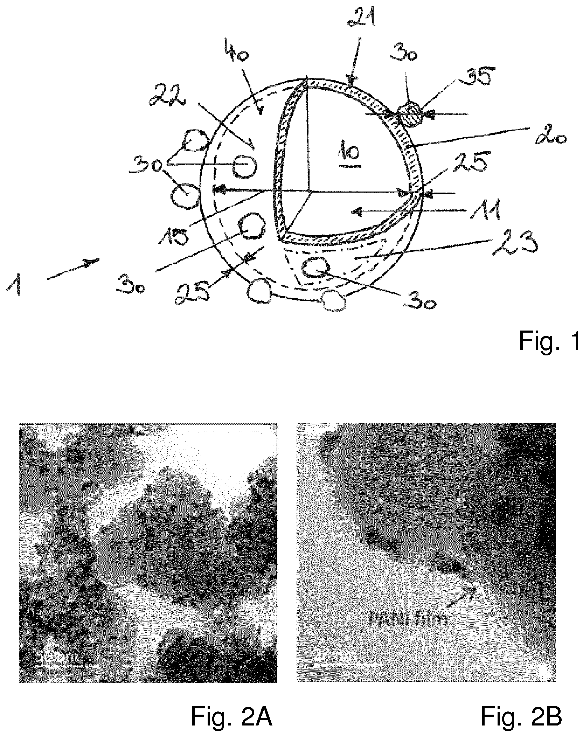

**Fig. 1** depicts in a schematic isometric view in a partly cut-free way an electrocatalytically active nanocomposite material 1 according to the invention. The segment on the upper right side of the shown nanocomposite material 1 is cut free to allow a view into the inside structure of said material 1. As inner core an electrically conductive support material 10 is used, which is here a carbon particle 11 of a carbon black powder with a mean diameter 15 of said carbon particle 11 of approximately 50 nm. The carbon particle 11 is depicted here as sphere but can of course deviate from the spherical form in reality.

The inner core of the electrically conductive support material 10 is completely embedded within a coating made of polyaniline 20. The polyaniline layer 21 has an outer surface 22 as well as an outer surface section 23 and shows here a layer thickness 25 of said polyaniline layer 21 of approximately 2 nm. On its outer surface 22 said polyaniline layer 21 is decorated with platinum nanoparticles 30 that are firmly bound to the polyaniline layer 21. The platinum nanoparticles 30 have here a mean diameter 35 of approximately 5 nm.

An intermediate product 40 of said support material 10 being coated with a polyaniline layer 21 is not shown explicitly, but one can imagine such an intermediate product 40 like the electrocatalytically active nanocomposite material 1 as shown in Fig. 1 but without platinum nanoparticles 30 decorated on its outsides.

In the following figures for the ease of reference the inventive electrocatalytically active nanocomposite material in its embodiment with an electrically conductive support material that contains carbon (C) is written for short as "C@PANI+Pt catalyst".

**Figures 2A** and **2B** show transmission electron microscopy (TEM) images of the electrocatalytically active nanocomposite material according to the invention. **Fig. 2A** shows the inventive C@PANI+Pt catalyst at a larger scale - as indicated in the lower left corner of Fig. 2A via a 50 nanometer [nm] scale display insert.

**Fig. 2B** is a detailed view of Fig. 2A at an even smaller scale - as indicated in the lower left corner of Fig. 2A via a 20 nanometer [nm] scale display insert. As inner core carbon particles are used as electrically conductive support material. Both images of Fig. 2A and Fig. 2B show the advantageous uniform distribution of Pt nanoparticles that are firmly bound onto the polyaniline layer of said nanocomposite material. As can be seen in these two images, the coating polyaniline (PANI) layer embeds the carbon particles as support material, but advantageously surrounds the platinum nanoparticles without masking or covering them.

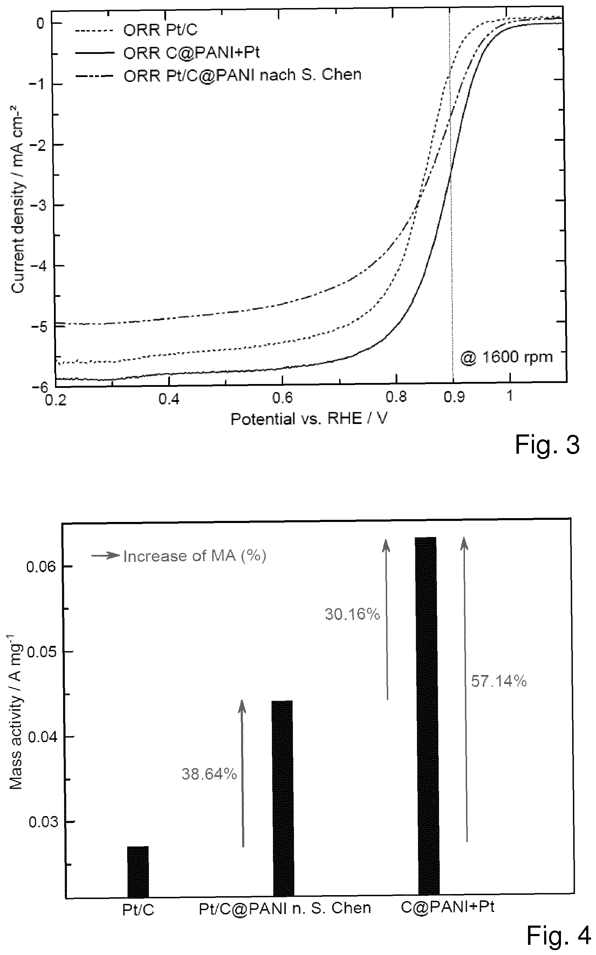

**Fig. 3** shows polarization curves of the oxygen reduction reaction (ORR) of a common reference Pt/C catalyst (marked as dotted curve), the Pt/C@PANI catalyst according to *S. Chen et al.* (marked as dotdashed curve) and the inventive C@PANI+Pt catalyst (marked as continuous solid curve). The oxygen reduction reaction (ORR) has been recorded with a three-electrodes set-up in oxygen saturated 0.1 M perchloric acid (HClO₄) electrolyte at a scan rate of 10 mV per second [mV s⁻¹], at a rotation speed of 1600 rpm (rotations per minute) in a potential range between 0.2 V and 1.1 V. The vertical dotted line indicates the current at a potential of 0.9 V, which was used to calculate the mass activities, that are illustrated in Fig. 4.

It can be seen in Fig. 3 for example at the indicated potential of 0.9 V, that the current density given in mA per cm² [mA cm⁻²] is higher for the inventive C@PANI+Pt catalyst (here approximately at -2.5 mA cm⁻²) than for the common reference Pt/C catalyst (here approximately at -1 mA cm⁻²) and the Pt/C@PANI catalyst according to *S. Chen et al.* (here approximately at -1.7 mA cm⁻²). The higher the current density at a given potential - here marked for a potential of 0.9 V - the higher is the mass activity of the respective catalyst. Another feature that indicates high catalytic activity toward the oxygen reduction reaction is a high onset potential in the range between 0.9 and 1 V. Herein, among the tested catalysts, the inventive C@PANI+Pt catalyst shows the highest onset potential, which already points to the highest mass activity as illustrated in Fig. 4.

**Fig. 4** shows representative mass activities as indicator for electrocatalytic activity of each catalyst sample toward the oxygen reduction reaction (ORR). Again a common reference Pt/C catalyst (marked as dotted curve), the Pt/C@PANI catalyst according to *S. Chen et al.* (marked as dotdashed curve) and the inventive C@PANI+Pt catalyst (marked as continuous solid curve) are shown in this diagram. The mass activity is the result of the division of the kinetic limited current, which was determined by dividing the product of diffusion limited current (0.2 - 0.4 V) and the current at 0.9 V through the difference of the both, through the loading of platinum on the catalyst electrode.

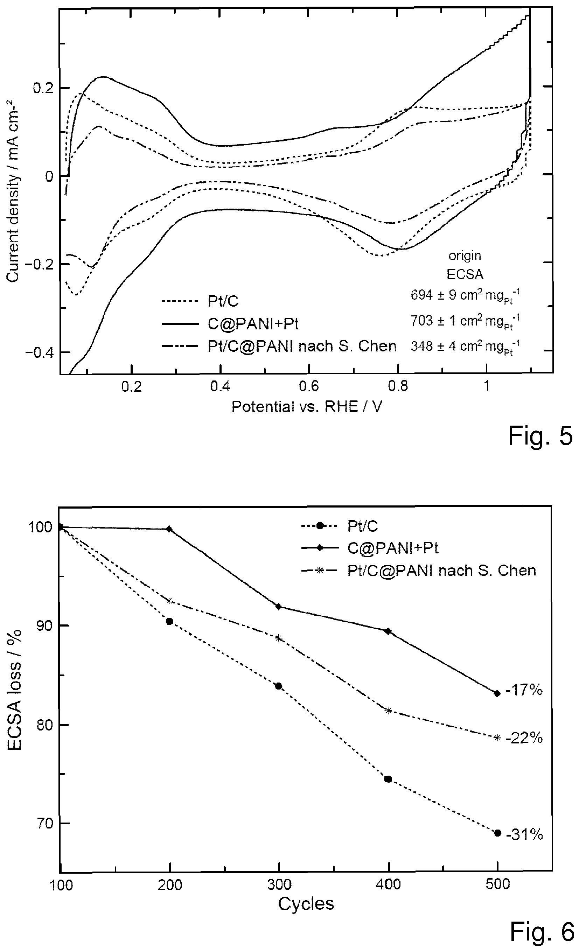

**Fig. 5** shows a cyclic voltammogram of a common reference Pt/C catalyst (marked as dotted curve), the Pt/C@PANI catalyst according to *S. Chen et al.* (marked as dotdashed curve) and the inventive C@PANI+Pt catalyst (marked as continuous solid curve). The cyclic voltammogram has been recorded with a three-electrodes set-up in nitrogen-saturated 0.1 M HClO₄ electrolyte at a scan rate of 10 mV per second [mV s⁻¹] in a potential range between 0.05 V and 1.1 V. The electrochemical surface area (ECSA) was calculated by integrating the hydrogen desorption peak (0.05 - 0.40 V) and dividing by 210 micro-Coulombs per cm² [*µ*C cm⁻²], the estimated charge associated with the desorption of a monolayer of hydrogen atoms on a smooth polycrystalline Pt surface. The obtained currents were normalized relative to the geometric surface area of the catalyst electrode giving the results of the ECSA in cm² per mg of platinum [cm² mg_{Pt}⁻¹]. As to the selective formation of the PANI layer in the embodiment of the inventive C@PANI+Pt catalyst, whose formation is achieved with the invented synthesis method, that reinforces the intermolecular interactions between Pt and C nanoparticles, the inventive C@PANI+Pt catalyst shows the highest and most stable ECSA compared to the two other catalysts. This is visualized in Fig. 6.

**Fig. 6** shows normalized loss data of respective electrochemical surface areas (ECSA) of the common reference Pt/C catalyst (marked as dotted curve), the Pt/C@PANI catalyst according to *S. Chen et al.* (marked as dotdashed curve) and the inventive C@PANI+Pt catalyst (marked as continuous solid curve) after repeated potential cycles as durability test. As the selective PANI layer in case of the inventive C@PANI+Pt catalyst protects the inner carbon core from corrosion and compounds the interaction between the Pt and the carbon nanoparticles, the decrease of ECSA counts only 17% ECSA loss over 500 potential cycles, whereas the decrease of Pt/C@PANI catalyst according to *S. Chen et al.* and the common reference Pt/C catalyst counts 22% and 31% of ECSA loss over 500 potential circles, respectively. This is attributed to the missing polymer coating in case of the common reference Pt/C catalyst and to the aforesaid structural disadvantages of the Pt/C@PANI catalyst according to *S. Chen et al.*

Thus, it could be demonstrated that the inventive electrocatalytically active nanocomposite material is perfectly suitable for highly stable and active cathode catalysts for the oxygen reduction reaction (ORR) toward durable polymer electrolyte fuel cells.

### LIST OF REFERENCE SIGNS

- 1: electrocatalytically active nanocomposite material
- 10: electrically conductive support material
- 11: carbon particle
- 15: mean diameter of carbon particle
- 20: polyaniline
- 21: polyaniline layer
- 22: outer surface of polyaniline layer
- 23: outer surface section of polyaniline layer
- 25: layer thickness of polyaniline layer
- 30: platinum nanoparticle
- 35: mean diameter of platinum nanoparticle
- 40: intermediate product of support material coated with polyaniline layer

## Claims

1. A functionalized electrocatalytically active nanocomposite material (1), comprising an electrically conductive support material, polyaniline as well as platinum nanoparticles, **characterized in that** said electrically conductive support material (10) is embedded within a coating layer (21) of polyaniline (20) and said polyaniline layer (21) is decorated with platinum nanoparticles (30) that are firmly bound to an outer surface (22) of said polyaniline layer (21).

2. The electrocatalytically active nanocomposite material (1) according to claim 1, **characterized in that** said platinum nanoparticles (30) are distributed, preferably are uniformly distributed, over at least an outer surface section (23) of said polyaniline layer (21).

3. The electrocatalytically active nanocomposite material (1) according to claim 1 or 2, **characterized in that** the electrically conductive support material (10) contains carbon (11) and is selected from the group of carbon powder, carbon black powder, graphite particles, graphene particles, carbon nanotubes, carbon fibers and/or mesoporous carbon.

4. The electrocatalytically active nanocomposite material (1) according to any of claims 1 to 3, **characterized in that** the electrically conductive support material (10) comprises a polyaniline surface functionalization wherein the platinum nanoparticles (30) are covalently bonded to an outer surface (22) of said polyaniline layer (21).

5. The electrocatalytically active nanocomposite material (1) according to any of claims 1 to 4, **characterized in that** the composition of said electrocatalytically active nanocomposite material (1) contains in percent by weight [% (w/w)]:
- from 5% to 50%, preferably from 10% to 40%, particularly preferably 30%, of polyaniline (20);
- from 10% to 70%, preferably from 20% to 60%, particularly preferably 50%, of platinum nanoparticles (30).

6. The electrocatalytically active nanocomposite material (1) according to any of claims 1 to 5, **characterized in that** the ranges of the length extensions of said electrocatalytically active nanocomposite material (1) are in nanometers [nm]:
- from 10 nm to 100 nm, preferably from 20 nm to 80 nm, particularly preferably from 40 nm to 60 nm, of mean diameter (15) of said electrically conductive support material (10);
- from 0.1 nm to 5 nm, preferably from 0.2 nm to 2 nm, particularly preferably from 0.5 nm to 1 nm, of mean layer thickness (25) of said polyaniline layer (21);
- from 1 nm to 20 nm, preferably from 2 nm to 10 nm, particularly preferably from 4 nm to 6 nm, of mean diameter (35) of said platinum particles (30).

7. The electrocatalytically active nanocomposite material (1) according to any of claims 1 to 6, **characterized in that** the loading ratio of platinum nanoparticles (30) to electrically conductive support material (10) is 50 : 50 and/or the loading ratio of platinum nanoparticles (30) to polyaniline (20) is 1 : 0.6.

8. An electrocatalyst, comprising the electrocatalytically active nanocomposite material (1) according to any of claims 1 to 7.

9. A fuel cell, in particular a polymer electrolyte membrane fuel cell, comprising the electrocatalyst according to claim 8.

10. An electrolyser, comprising the electrocatalyst according to claim 8.

11. A method for producing an electrocatalytically active nanocomposite material (1), comprising the following steps:
-a- Providing an electrically conductive support material (10);
-b- Dissolving of aniline monomer in a first acidic reaction solution;
-c- Dispersing said electrically conductive support material (10) in said first acidic reaction solution containing dissolved aniline monomer;
-d- Initiating an oxidative polymerization reaction of aniline by means of adding ammonia persulfate as oxidant into said first acidic reaction solution;
-e- Coating the electrically conductive support material (10) within a thin layer of polyaniline (20) to obtain a functionalized intermediate product (40) of said conductive support material (10) being embedded within a coating layer (21) of polyaniline (20);
-f- Dispersing said intermediate product (40) in a second acidic reaction solution;
-g- Adding of hexachloroplatinic acid into said second acidic reaction solution;
-h- Initiating an anion exchange reaction by means of adding a reducing agent into said second acidic reaction solution and to reduce the hexachloroplatinic acid to platinum nanoparticles;
-i- Mixing of said second acidic reaction solution;
-j- Depositing of platinum nanoparticles (30) on the polyaniline layer (21) of said intermediate product (40) to obtain said electrocatalytically active nanocomposite material (1).

12. The production method according to claim 11, **characterized in that** as a subsequent process to step -e- and/or as a subsequent process to step -j-, cleaning and drying of the intermediate product (40) and/or of the electrocatalytically active nanocomposite material (1) is/are carried out.

13. The production method according to claim 11 or 12, **characterized in that** in step -h- a bromide anion exchange reaction using sodium borohydride as reducing agent is applied.

14. The production method according to any of claims 11 to 13, **characterized in that** for mixing of said second acidic reaction solution according to step -i- an ultrasonic mixer is applied for a mixing period from 1 hour to 3 hours, preferably of 2 hours.

15. The production method according to any of claims 11 to 14, **characterized in that** temperature of steps -a- to -e- to obtain said functionalized intermediate product (40) is kept below 15°C, preferably below 12°C, particularly preferably below 10°C.

16. A method for producing an electrocatalyst, comprising the following steps:
(i) Dispersing a colloidal solution of an electrocatalytically active nanocomposite material (1) according to any of claims 1 to 7, and/or produced via a production method according to any of claims 11 to 15;
(ii) Depositing the dispersed electrocatalytically active nanocomposite material (1) on a substrate to create a porous three-dimensional network of the electrocatalytically active nanocomposite material (1).

17. The production method according to claim 16, **characterized in that** the substrate comprises at least one of a polymer electrolyte membrane and a gas diffusion layer for usage in a fuel cell and/or an electrolyser.
